# FASCICULE DE BREVET EUROPEEN

(11) **EP 0 521 119 B1**
(45) Date de publication et mention de la délivrance du brevet: **08.05.1996**
(21) Numéro de dépôt: 92902313.3
(22) Date de dépôt: 17.01.1992
(51) Int. Cl.: A61C 5/02, A61C 17/02, B08B 3/12

(54) **EQUIPEMENT POUR NETTOYER DES CAVITES**
GERÄT ZUM REINIGEN VON KAVITÄTEN
CAVITY CLEANING APPARATUS

(30) Priorité: 21.01.1991 CH 152/91; 10.01.1992 CH 71/92
(43) Date de publication de la demande: 07.01.1993
(73) Titulaire: MEDITEC S.A., CH-1024 Ecublens (CH)
(72) Inventeur: GROSREY, Jean, CH-1261 Arzier (CH)
(74) Mandataire: KIRKER & Cie S.A.
(86) Numéro de dépôt international: CH9200012
(87) Numéro de publication internationale: WO9212685

(56) Documents cités:
- EP-A- 0 299 919
- DE-A- 3 248 471
- DE-C- 860 839

## Description

L'équipement décrit dans le brevet US No 4.993.947 (=EP-A-0 299 919) du même inventeur et servant à nettoyer des cavités dentaires en vue du traitement des racines dentaires, donne entièrement satisfaction quant à sa fonction, mais il s'est avéré que la construction selon ce brevet antérieur pouvait être améliorée de façon importante, sur les points suivants.

Le fait d'utiliser le médicament lui-même pour générer le phénomène de cavitation conduit à une consommation très exagérée de ce produit.

La cavitation n'étant pas générée exclusivement dans les canaux reliés à la cavité pulpaire mais se manifestant aussi dans le reste de l'installation, la puissance exigée par le fonctionnement est exagérément et inutilement grande.

Une pompe à engrenage de qualité et son réglage sont onéreux.

La présente invention vise à remédier à ces inconvénients. Elle a pour objet un équipement pour nettoyer des cavités dans lesquelles l'emploi d'un outil ou d'un jet est impossible et l'emploi d'ultrasons ne donne pas satisfaction, comprenant un corps ajustable de façon étanche à l'endroit de l'entrée de ladite cavité, une pompe à piston à simple effet, pourvue d'une soupape automatique du côté aspiration et reliée à un réservoir de liquide, pour générer des phases alternées d'aspiration du liquide de nettoyage hors du réservoir et de compression de ce liquide vers le corps, caractérisé en ce que la pompe à piston travaille à fréquence sonore, en ce qu'il comporte une trompe à eau agencée dans le corps et dont l'entrée est reliée au conduit de sortie de ladite pompe à piston, dont la sortie est reliée à un conduit d'évacuation du liquide hors de l'équipement, et dont le conduit d'aspiration débouche à l'intérieur de ladite cavité lorsque le corps est en position de travail, la longueur dudit conduit d'évacuation étant telle qu'en régime de travail, il se produise à chaque cycle de la pompe à piston un mouvement d'aller et de retour d'une certaine quantité de liquide dans ce conduit d'évacuation, sous l'effet des alternances de compression et d'aspiration de cette pompe dans une conduite la reliant à ce conduit d'évacuation à travers la trompe à eau, pour produire une dépression et des bulles de vapeur dans ladite cavité lors de chaque phase de compression de la pompe à piston, et une contraction de ces bulles de vapeur sous l'action de la pression exercée sur ces bulles de vapeur par l'énergie cinétique du liquide effectuant son mouvement de retour dans le conduit d'évacuation pendant la fin de la phase d'aspiration de la pompe à piston, produisant ainsi à chaque cycle, de la cavitation dans ladite cavité, pour assurer son nettoyage complet.

Le dessin annexé représente, à titre d'exemple, trois formes d'exécution de l'équipement selon l'invention.

La figure 1 est un schéma de l'ensemble de la première forme d'exécution destinée au nettoyage de la cavité et des canaux radiculaires d'une dent avant son traitement de racine.

La figure 2 représente, à plus grande échelle, un corps formant un embout appartenant à cette forme d'exécution et permettant de produire le phénomène de cavitation dans une dent, et d'y introduire un médicament de traitement.

La figure 3 est une vue en coupe de cet embout, selon 3-3 de la fig. 2.

Fig. 4 est une vue en coupe, à grande échelle, de la seconde forme d'exécution, qui est conçue pour nettoyer les pores de la peau et éliminer les comédons.

Fig. 5 est une vue en coupe, à grande échelle, de la troisième forme d'exécution, qui est destinée au nettoyage de lentilles de contact.

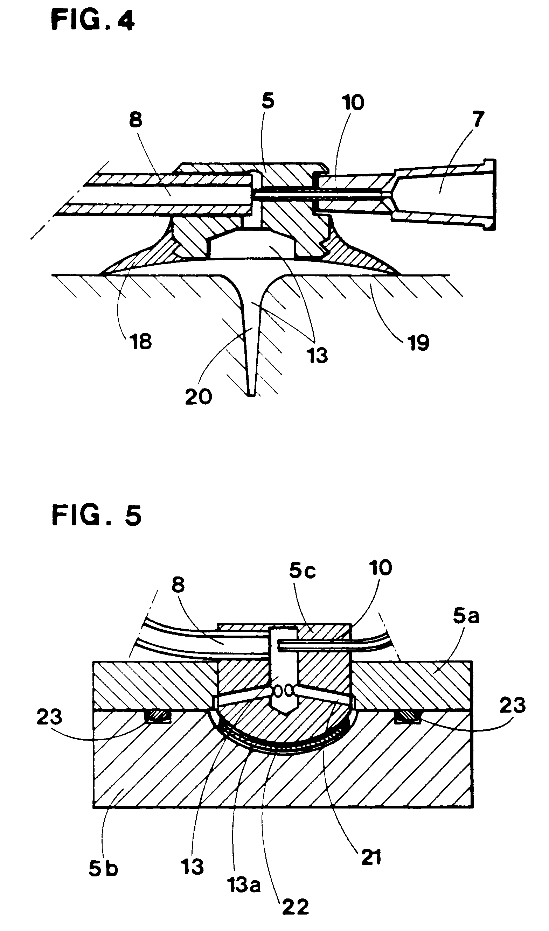

Sur ces figures 4 et 5, les parties homologues de parties de la première forme d'exécution sont désignées par les mêmes numéros, pour faciliter la compréhension.

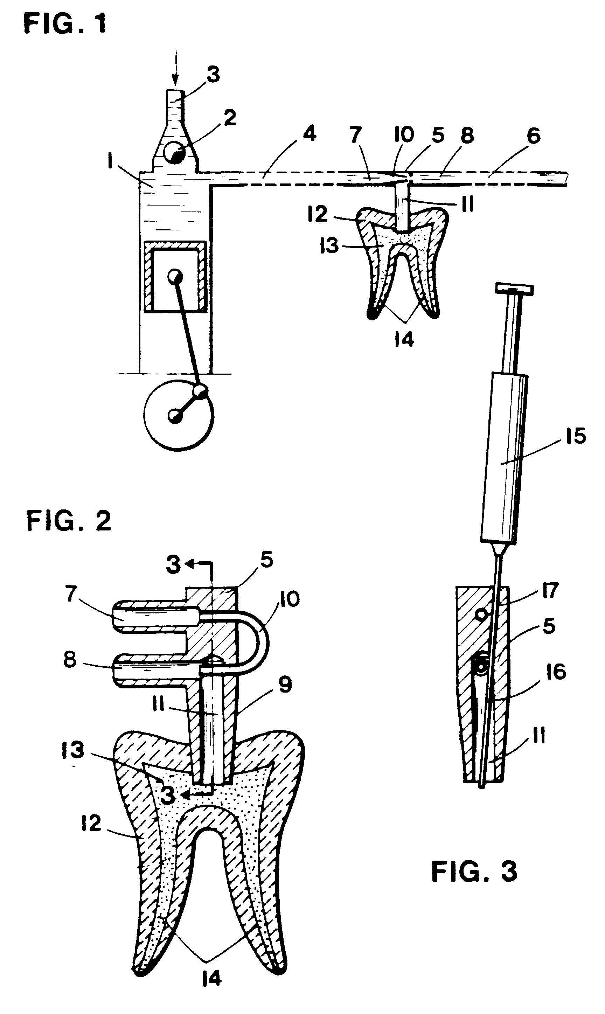

Sur la figure 1 on voit une pompe à piston 1 à simple effet et munie seulement d'une soupape automatique d'admission 2. Cette pompe est entraînée par un moteur non représenté et elle est raccordée par une conduite 3 à un réservoir (non représenté) d'alimentation en un liquide neutre, de préférence de l'eau, et par une conduite 4, à une connexion d'entrée 7 d'un embout 5 (voir fig. 2). Cet embout constitue comme on le verra plus loin, une mini trompe à eau, alimentée par un jet pulsé à fréquence sonore (par la pompe 1), créant pendant le passage du fluide à l'intérieur de cette trompe, une dépression dans la cavité pulpaire de la dent, donc de ce fait des bulles de vapeur du liquide qui s'y trouve, puis ensuite, comme il est expliqué plus loin, une surpression qui fait imploser les bulles de vapeur ainsi formées, ce qui produit la cavitation.

La figure 2 montre l'embout 5 formant la mini trompe à eau. Les conduits 7 et 8 représentent respectivement les connexions d'admission et d'échappement de l'embout. Ce dernier est adapté de façon amovible sur une dent à traiter 12 par une partie conique 9 dimensionnée de façon à raccorder facilement l'embout sur une dent, qui a été préalablement ouverte avec une fraise de forme adaptée à cette forme conique. L'expérience montre qu'une conicité de 4^{o} donne entière satisfaction. Un conduit 11 est prévu axialement dans la partie conique 9. L'éjecteur de la trompe est constitué par un tube capillaire 10 qui est dimensionné pour provoquer, lors du passage du liquide à son intérieur, une perte de charge telle que, lors du retour du piston de la pompe 1, dans sa phase d'aspiration, la dépression qui a tendance à se former ne soit pas suffisante pour former des bulles de vapeur qui généreraient, lors de la phase de compression, des phénomènes de cavitation non désirés dans la conduite 7 d'amenée à l'embout, ainsi que dans la pompe 1 elle-même. L'extrémité de sortie du tube capillaire 10 est placée à fleur et en face de la connexion d'échappement 8. De cette façon, le phénomène de Venturi se produit et on a construit une trompe à eau. Pendant le temps de passage du fluide dans le tube capillaire 10, une dépression est créée dans le conduit 11 et donc aussi dans la chambre pulpaire 13 et dans les canaux radiculaires 14.

Une aiguille 15 d'une seringue hypodermique amovible 16 (fig. 3) peut être introduite à friction dans un canal 17 traversant longitudinalement l'embout jusqu'à l'extrémité de sortie du conduit 11 de liaison de l'embout avec la chambre pulpaire 13. On utilise ainsi la légère dépression moyenne négative régnant dans la chambre pulpaire pour introduire dans la chambre pulpaire 13 et ainsi aussi dans les canaux radiculaires 14, une quantité de médicament de traitement qui est directement proportionnelle à cette dépression. Il est bien précisé qu'aucune pression ne doit être exercée sur la seringue d'où le liquide est aspiré par la dépression régnant dans la chambre pulpaire.

Grâce à cette disposition, en cas d'obturation accidentelle du tube d'échappement 6, le produit de traitement est refoulé dans la seringue et ne risque pas de passer massivement au-delà des canaux radiculaires 14.

On va expliquer maintenant dans le détail le fonctionnement de l'installation décrite.

Lorsque le piston de la pompe 1 (fig. 1) est dans sa phase de compression, la soupape 2 est fermée et le liquide contenu dans le cylindre s'échappe par la conduite 4, l'éjecteur 10 et, enfin, par le tube d'échappement 6. Par l'effet de Venturi une dépression se produit alors dans l'embout 5, puisque la section de l'injecteur 10 est plus petite que celle des conduits amont 4 et aval 6. Cette dépression résulte du théorème de BERNOULLI. La section de l'éjecteur 10 est telle que la dépression créée dans le tube 11 est inférieure à la tension de vapeur du liquide; il y a donc formation de bulles de vapeur dans le tube 11, dans la cavité pulpaire 13 et dans les canaux radiculaires 14.

Lorsque le piston de la pompe 1 entre dans sa phase d'aspiration, le flux de liquide dans la conduite 4 a tendance à s'inverser, la soupape 2 s'ouvre et la pompe s'alimente en liquide frais à partir du réservoir. Comme le tube d'échappement 6 n'est plus alimenté, la masse de liquide qu'il contient ralentit son mouvement, mais par son inertie, elle va contribuer à l'augmentation du volume des bulles de vapeur déjà contenues dans le tube 11 et dans la cavité pulpaire. Puis, lorsque la vitesse du liquide dans le tube 6 s'annule et ensuite s'inverse dans ce tube 6, les bulles de vapeur formées précédemment se contractent. Puisque l'écoulement dans le tube 6 s'est inversé, l'énergie cinétique de la masse de liquide en retour dans le tube d'échappement 6 devient telle qu'il apparaît dans le tube 11 et dans la cavité pulpaire et les canaux radiculaires, une surpression qui est fonction des dimensions de ce tube (coup de bélier), qui fait que le volume des bulles à son intérieur devient nul. C'est l'implosion de ces bulles et l'apparition de la cavitation.

Il a donc ainsi été généré des bulles de vapeur et qui ont ensuite implosé, en produisant comme il est connu le phénomène de cavitation qui est nécessaire pour faire agir le liquide par sa turbulence dans la cavité pulpaire 13 et jusqu'au fond des tubes capillaires que sont les canaux radiculaires 14. Le cycle peut alors recommencer comme décrit précédemment lorsque le piston de la pompe entre à nouveau dans une phase de compression. Ainsi est réalisé, grâce à la cavitation, un nettoyage parfait de la cavité pulpaire et des canaux radiculaires et une circulation du liquide dans la dent.

Il est facile de vérifier que les choses se passent bien ainsi, en effectuant un montage en verre permettant d'observer sous le microscope la formation des bulles et leur implosion, si l'on a soin d'éclairer le système avec un stroboscope dont la fréquence d'allumage est légèrement plus basse que celle du va-et-vient de la pompe à piston. On observe ainsi le grossissement des bulles, puis leur implosion jusqu'à la fine extrémité des canaux radiculaires. On observe aussi la grande turbulence qui règne dans tout le système. Il est ainsi très facile de régler la longueur du tube d'échappement 6 pour limiter la formation de bulles aux endroits désirés. En effet, lorsque du liquide s'écoulant dans le tube d'échappement 6 revient en arrière, il produit une onde de pression dans ce tube, d'où l'importance de la longueur du tube d'échappement 6 qui détermine la valeur de la légère surpression suffisante pour assurer l'implosion des bulles de vapeur, créant ainsi la cavitation nécessaire au bon fonctionnement du système, et une dépression moyenne négative dans la cavité pulpaire, qui va empêcher l'injection du médicament au-delà du système radiculaire 14.

Pour éviter la formation indésirée de bulles de cavitation dans la pompe 1 et dans la conduite d'amenée 4 du liquide, on prévoit un rapport suffisamment grand entre la section de la conduite 4 et celle de l'éjecteur 10. Un rapport de 100 a donné des résultats très satisfaisants.

Si maintenant on fait un parallèle entre l'équipement selon le brevet des Etats-Unis cité plus haut et celui qui vient d'être décrit plus haut, on constate ceci.

Le principe permettant de générer des bulles de cavitation est le même que dans ce brevet américain mais la pompe à engrenage qui donnait la dépression est remplacée par une trompe à eau qui est incluse dans l'embout de raccordement à la dent, et la remise en pression pour produire l'implosion de ces bulles est assurée par l'effet de retour du liquide dans le tube d'échappement, qui produit une onde de pression dans ce tube d'échappement. La pompe à piston devient, de ce fait, un générateur de jet pulsé et on comprend que la longueur du tube d'échappement 6 est un paramètre important du fonctionnement de l'installation.

La pompe 1 travaillant à fréquence sonore, on évite tout effet indésiré d'ultrasons dans le système et dans la dent.

On voit sur la fig. 4 un corps 5, métallique ou en matière plastique, sur lequel est vissée une ventouse flexible 18 destinée à être appliquée sur la surface d'une partie 19 de l'épiderme d'une personne, où l'on voit en 20 un des pores dont il s'agit de faire disparaître un comédon non représenté et qui le remplit.

Cette seconde forme d'exécution comporte, comme la première, une pompe à piston à simple effet, munie seulement d'une soupape automatique d'admission. Cette pompe est entraînée par un moteur non représenté, qui fait travailler cette pompe à une fréquence sonore, pour éviter tout effet indésirable des ultrasons. Ladite pompe est raccordée à un réservoir non représenté d'alimentation en un liquide, par exemple de l'eau additionnée d'un produit de nettoyage ou médicamenteux approprié. Une connexion d'entrée 7 est fixée au corps 5. Une connexion 8 d'échappement de ce liquide est fixée au corps 5. Le liquide arrivant en 7 passe à travers un éjecteur constitué par un tube capillaire 10, d'où il sort à fleur et en face de l'entrée de la connexion d'échappement 8, dans un espace 11 débouchant dans une cavité 13. Cet agencement constitue une trompe à eau alimentée par un jet pulsé, en sorte qu'il se produit le phénomène de Venturi, qui crée une dépression dans la cavité 13 et une cavitation périodique dans le liquide se trouvant dans cette cavité 13, donc aussi dans l'intérieur du pore 20, où le comédon est disloqué en très petits fragments et évacué ensuite en 8, avec le liquide.

Dans la forme d'exécution selon fig. 5, le corps 5 de l'équipement comprend trois parties assemblées 5a, 5b, 5c déterminant une chambre 13 communiquant par des passages 21 avec une chambre auxiliaire 13a agencée pour recevoir une lentille de contact hydrophile 22 qu'il s'agit de nettoyer.

On voit en 23 un joint O-ring d'étanchéité entre les parties 5a et 5b, en 10 l'injecteur d'une trompe à eau et en 8 la connexion d'échappement de cette trompe.

Les lentilles de contact hydrophiles sont faites en un matériau présentant un grand nombre de petits interstices qui reçoivent le liquide de sécrétion des glandes lacrymales, mais aussi, inévitablement, des impuretés indésirées qui viennent s'y loger. Il s'agit de protéines et de dépôts calcaires, qui sont éliminés par un produit adéquat dissous dans le liquide de nettoyage.

Dans cet exemple, la lentille de contact hydrophile 22 est nettoyée par l'effet de cavitation dans le liquide et l'action du produit de nettoyage, sans altérer les qualités optiques de cette lentille. Ceci est un grand avantage car on sait que le nettoyage de telles lentilles souples à l'aide d'ultrasons altère fortement leur surface, donc leurs qualités optiques.

On comprend de ce qui précède que l'invention n'est pas limitée aux exemples décrits. Elle est applicable dans tous les cas où il s'agit de nettoyer selon le principe de la cavitation, des cavités ou des interstices de pièces mécaniques ou du corps humain ou animal et où il est impossible d'agir avec un outil ou un jet, et où l'emploi d'ultrasons doit être évité en raison de leur action indésirable sur les parties soumises au nettoyage.

## Revendications

1. Equipement pour nettoyer des cavités dans lesquelles l'emploi d'un outil ou d'un jet est impossible et l'emploi d'ultrasons ne donne pas satisfaction, comprenant un corps (5) ajustable de façon étanche à l'endroit de l'entrée de ladite cavité (13), une pompe à piston (1) à simple effet, pourvue d'une soupape automatique (2) du côté aspiration (3) et reliée à un réservoir de liquide, pour générer des phases alternées d'aspiration du liquide de nettoyage hors du réservoir et de compression de ce liquide vers le corps (5), caractérisé en ce que la pompe à piston (1) travaille à fréquence sonore, en ce qu'il comporte une trompe à eau (7,8,10,11) agencée dans le corps (5) et dont l'entrée (7) est reliée au conduit de sortie (4) de ladite pompe à piston, dont la sortie (8) est reliée à un conduit (6) d'évacuation du liquide hors de l'équipement, et dont le conduit d'aspiration (11) débouche à l'intérieur de ladite cavité (13) lorsque le corps (5) est en position de travail, la longueur dudit conduit d'évacuation (6) étant telle qu'en régime de travail, il se produise à chaque cycle de la pompe à piston (1) un mouvement d'aller et de retour d'une certaine quantité de liquide dans ce conduit d'évacuation (6), sous l'effet des alternances de compression et d'aspiration de cette pompe (1) dans une conduite (4) la reliant à ce conduit d'évacuation (6) à travers la trompe à eau (7,8,10,11), pour produire une dépression et des bulles de vapeur dans ladite cavité (13) lors de chaque phase de compression de la pompe à piston (1), et une contraction de ces bulles de vapeur sous l'action de la pression exercée sur ces bulles de vapeur par l'énergie cinétique du liquide effectuant son mouvement de retour dans le conduit d'évacuation (6) pendant la fin de la phase d'aspiration de la pompe à piston (1), produisant ainsi à chaque cycle, de la cavitation dans ladite cavité (13), pour assurer son nettoyage complet.

2. Equipement selon la revendication 1, caractérisé en ce que la pompe de compression (1) et la trompe à eau (7,8,10,11) sont prévues pour faire régner une pression moyenne négative dans ladite cavité (13) pendant le nettoyage.

3. Equipement selon la revendication 1 ou 2, caractérisé en ce que le rapport de la section du conduit d'amenée du liquide au corps susdit (5) à la section de l'éjecteur (10) de la trompe à eau (7,8,10,11) est de l'ordre de 100.

4. Equipement selon la revendication 1, caractérisé en ce que la section de l'éjecteur (10) de la trompe à eau (7,8,10,11) est telle que la dépression créée dans le tube d'aspiration (11) de cette trompe est inférieure à la tension de vapeur du liquide, ce qui assure la formation de bulles dans ce tube (11) et dans la cavité à nettoyer.

5. Equipement selon la revendication 1, caractérisé en ce que le corps susdit (5) constitue un embout ajustable de façon étanche sur une ouverture pratiquée dans la cavité pulpaire d'une dent, pour assurer le nettoyage complet par cavitation de cette cavité et des canaux radiculaires.

6. Equipement selon la revendication 5, caractérisé en ce que l'embout (5) présente un canal (17) le traversant longitudinalement, pour recevoir à friction l'aiguille (16) d'une seringue hypodermique (15) amovible dont l'extrémité débouche dans la cavité pulpaire (13) lorsque l'embout (5) est adapté à une dent, cette seringue (15) étant prévue pour contenir un médicament de traitement, la dépression moyenne régnant dans la cavité pulpaire (13) pendant le traitement assurant l'aspiration dans cette cavité d'une quantité appropriée de médicament.

7. Equipement selon la revendication 6, caractérisé en ce que ladite seringue (15) étant en position de travail sur l'embout, elle constitue un moyen de sécurité empêchant la sortie du médicament hors de la dent, par les canaux radiculaires (14), en cas d'obstruction accidentelle du conduit d'évacuation (6) du liquide hors de l'équipement, en autorisant alors le liquide se trouvant dans la cavité pulpaire à refouler dans la seringue (15).

8. Equipement selon la revendication 1, caractérisé en ce que son corps (5) est pourvu d'une ventouse (18) destinée à être appliquée sur une partie d'un épiderme (19), et en ce que l'intérieur de la ventouse (18) appartient à la cavité (13) dans laquelle se produit la cavitation, en sorte que cette dernière assure le nettoyage des pores (20) de la peau et l'élimination des comédons.

9. Equipement selon la revendication 1, caractérisé en ce que son corps (5) est formé de plusieurs parties assemblables délimitant à leur intérieur une cavité (13) dans laquelle se produit la cavitation, et une cavité auxiliaire (13a) communiquant avec elle et conformée pour recevoir au moins une lentille de contact hydrophile à nettoyer.

## Claims

1. A device for cleaning cavities, in which the use of a tool or of a jet is impossible and in which the use of ultrasounds is not satisfactory, including a body (5) sealingly adjustable at the place of the entrance to said cavity (13), a single-acting piston pump (1) provided with an automatic valve (2) on the suction side (3) and in communication with a container filled with a liquid, to generate alternating phases of suction of the cleaning liquid out from the container and of compression of this liquid in the direction of the body (5), characterized in that the piston pump (1) operates at an audible frequency, in and that it includes a water jet pump (7, 8, 10, 11) provided in the body (5), the inlet (7) of which is connected to the outlet conduit (4) of said piston pump, the outlet (8) of which is connected to a conduit (6) which discharges the liquid out of the device, and of which the suction conduit (11) opens inside said cavity (13) when the body (5) is in its operative position the length of said discharge conduit (6) being such that in operation, at each cycle of the piston pump (1), a reciprocating motion of a certain amount of liquid is produced in this discharge conduit (6) due to the alternating compression and suction of this pump (1) in the conduit (4) connecting the pump to this discharge conduit (6) via the water jet pump (7, 8, 10, 11), to produce a depression and vapour bubbles in said cavity (13) at each phase of compression of the piston pump (1) and a contraction of these vapour bubbles under the effect of the pressure exerted on these vapour bubbles by the kinetic energy of the liquid during its backward motion in the discharge conduit (6) during the end of the suction phase of the piston pump (1), thus producing at each cycle cavitation in said cavity (13) to ensure its thorough cleaning.

2. A device according to claim 1, characterized in that the compression pump (1) and the water jet pump (7, 8, 10, 11) are constructed so as to provide an average pressure in said cavity (13) which is negative during the cleaning.

3. A device according to claim 1 or 2, characterized in that the ratio of the cross-section of the feeding conduit for the liquid to said body (5), to the cross-section of the ejector (10) of the water jet pump (7, 8, 10, 11) is in the order of 100.

4. A device according to claim 1, characterized in that the cross-section of the ejector (10) of the water jet pump (7, 8, 10, 11) is such that the depression created in the suction tube (11) of this water jet pump is lesser than the vapour tension of the liquid, which ensures the formation of bubbles in this tube (11) and in the cavity to be cleaned.

5. A device according to claim 1, characterized in that said body (5) is provided as an adapter sealingly adjustable to an opening practiced in the dental pulp of a tooth, to provide a thorough cleaning by cavitation of this cavity and of the radicular channels.

6. A device according to claim 5, characterized in that the adapter (5) has a channel (17) extending therethrough longitudinally, to receive a tightly fitting needle (16) of a releasable hypodermic syringe (15), and of which the tip protrudes into the tooth cavity (13) when the adapter is fitted to a tooth, this syringe (15) being designed for containing a treating medicament, the average depression prevailing in the tooth cavity (13) during the treatment ensuring the suction into this cavity of an appropriate amount of medicament.

7. A device according to claim 6, characterized in that said syringe (15) when in its operative position on the adapter, acts as a safety means which prevents the outflow of medicament from the cavity via the radicular channels (14) in the case of an accidental obstruction of the conduit (6) for discharging the liquid out of the device, while allowing the liquid located inside the tooth cavity to flow back into the syringe (15).

8. A device according to claim 1, characterized in that its body (5) is provided with a suction cup (18) designed for application on a part of the epiderm (19) and in that the inside of the suction cup (18) belongs to a cavity (13) in which is produced the cavitation, so that the latter ensures the cleaning of the pores (20) of the skin and the removal of comedos.

9. A device according to claim 1, characterized in that its body (5) is formed of several parts which are assembled to define at their inside a cavity (13) in which is produced the cavitation and an ancillary cavity (13a) in communication with the first one and conformed to receive at least one hydrophilic lens for cleaning.

## Patentansprüche

1. Gerät zum Reinigen von Hohlräumen, in denen kein Werkzeug oder Strahl benutzt werden kann und die Anwendung von Ultraschall nicht befriedigt, mit einem Schaft (5), der dicht an die Mündung des benannten Hohlraumes (13) angepasst werden kann, und einer einstufigen Kolbenpumpe (1), die auf der Ansaugseite (3) mit einem selbsttätigen Ventil (2) ausgestattet und an ein Vorratsgefäss mit Flüssigkeit angeschlossen ist, um wechsclweise Phasen des Ansaugens von Reinigungsflüssigkeit aus dem Vorratsgefäss und Phasen des Zusammendrückens dieser Flüssigkeit in Richtung auf den Schaft (5) zu erzeugen, dadurch gekennzeichnet, dass die Kolbenpumpe (1) mit Schallfrequenz arbeitet und dass es ein im Schaft (5) angeordnetes Wasserstrahlgebläse (7, 8, 10, 11) umfasst, dessen Eingang (7) mit dem Austrittsrohr (4) der benannten Kolbenpumpe und dessen Ausgang (8) mit einem Rohr (6) zur Entleerung der Flüssigkeit aus dem Gerät verbunden ist, dessen Ansaugrohr (11) andererseits ins Innere des benannten Hohlraums (13) einmündet, wenn sich der Schaft (5) in Arbeitsstellung befindet, wobei das benannte Entleerungsrohr (6) eine solche Länge hat, dass sich unter Betriebsbedingungen bei jedem Zyklus der Kolbenpumpe (1) unter der Wirkung des abwechselnden Zusammendrückens und Ansaugens dieser Pumpe (1) in einer Leitung (4), die die Pumpe über das Wasserstrahlgebläse (7, 8, 10, 11) mit diesem Entleerungsrohr (6) verbindet, eine Vor- und Rückwärtsbewegung einer bestimmten Flüssigkeitsmenge in diesem Entleerungsrohr (6) ergibt, um während jeder Phase des Zusammendrückens der Kolbenpumpe (1) einen Unterdruck sowie Dampfblasen in dem benannten Hohlraum (13) zu erzeugen, hingegen eine Schrumpfung dieser Dampfblasen unter der Wirkung des Drucks, den die kinetische Energie der sich gegen Ende der Ansaugphase der Kolbenpumpe (1) in der Entleerungsleitung (6) zurückbewegende Flüssigkeit auf diese Blasen ausübt, so dass mit jedem Zyklus in dem benannten Hohlraum (13) Kavitation erzeugt wird, um seine vollständige Reinigung sicherzustellen.

2. Gerät gemäss Anspruch 1, dadurch gekennzeichnet, dass die mit Druckwasser arbeitende Pumpe (1) und das Wasserstrahlgebläse (7, 8, 10, 11) dafür sorgen, während der Reinigung in dem benannten Hohlraum (13) im Mittel einen negativen Druck aufrechtzuerhalten.

3. Gerät gemäss Anspruch 1 oder 2, dadurch gekennzeichnet, dass das Verhältnis zwischen dem Querschnitt der Flüssigkeitszuleitung zu dem oben benannten Schaft (5) und dem Querschnitt der Strahldüse (10) des Wasserstrahlgebläses (7, 8, 10, 11) eine Grössenordnung von 100 hat.

4. Gerät gemäss Anspruch 1, dadurch gekennzeichnet, dass der Querschnitt der Strahldüse (10) des Wasserstrahlgebläses (7, 8, 10, 11) so bemessen ist, dass der im Ansaugrohr (11) erzeugte Unterdruck dieses Strahlgebläses geringer als der Dampfdruck der Flüssigkeit ist, so dass die Bildung von Blasen in diesem Rohr (11) und in dem zu reinigenden Hohlraum sichergestellt ist.

5. Gerät gemäss Anspruch 1, dadurch gekennzeichnet, dass der oben benannte Schaft (5) einen Pfropfen darstellt, der dicht auf die in einen Hohlraum des Zahnmarks gebohrte Öffnung aufgepasst werden kann, um die vollständige Reinigung dieses Hohlraums und der Wurzelkanäle durch Kavitation sicherzustellen.

6. Gerät gemäss Anspruch 5, dadurch gekennzeichnet, dass der Pfropfen (5) einen längs durch ihn hindurchgehenden Kanal (17) aufweist, um unter Reibung die abnehmbare Nadel (16) einer Injektionsspritze (15) aufzunehmen, deren Spitze in den Hohlraum (13) im Mark mündet, wenn der Pfropfen (5) auf einen Zahn aufgepasst wurde, wobei diese Spritze (15) dafür vorgesehen ist, ein Medikament zur Behandlung zu enthalten, und der im Markhohlraum (13) während der Behandlung im Mittel herrschende Unterdruck für das Ansaugen einer geeigneten Menge des Medikaments in diesen Hohlraum sorgt.

7. Gerät gemäss Anspruch 6, dadurch gekennzeichnet, dass die benannte Spritze (15), während sie in Arbeitsstellung auf dem Pfropfen sitzt, ein Sicherheitshilfsmittel darstellt, wodurch verhindert wird, dass Medikament durch die Wurzelkanäle (14) aus dem Zahn austritt, wenn der Kanal (6) für die Entleerung der Flüssigkeit aus dem Gerät zufällig verstopft ist, indem die im Markhohlraum befindliche Flüssigkeit dann in die Spritze (15) zurückgedrückt werden kann.

8. Gerät gemäss Anspruch 1, dadurch gekennzeichnet, dass sein Schaft (5) mit einem Saugnapf (18) versehen ist, der dazu bestimmt ist, auf eine Partie einer Epidermis (19) aufgesetzt zu werden, und dass die Innenseite des Saugnapfes (18) dem Hohlraum (13) zugehört, in dem die Kavitation entsteht, so dass die Reinigung der Poren (20) in der Haut und die Entfernung von Mitessern durch die Kavitation sichergestellt wird.

9. Gerät gemäss Anspruch 1, dadurch gekennzeichnet, dass sein Schaft (5) aus mehreren zusammensetzbaren Partien, die auf ihrer Innenseite einen Hohlraum (13) begrenzen, in dem die Kavitation entsteht, sowie aus einem Hilfshohlraum (13a) besteht, der mit dem Hohlraum (13) in Verbindung steht und so gestaltet ist, dass er zumindest eine zu reinigende hydrophile Haftschale aufnimmt.
